# EUROPÄISCHE PATENTANMELDUNG

(11) **EP 1 603 215 A2**
(43) Veröffentlichungstag der Anmeldung: **07.12.2005**
(21) Anmeldenummer: 05104460.0
(22) Anmeldetag: 25.05.2005
(51) Int. Cl.: H02K 29/08

(54) **Anker für eine elektrische Maschine**

(30) Priorität: 02.06.2004 DE 102004026974
(71) Anmelder: ROBERT BOSCH GMBH, 70442 Stuttgart (DE)
(72) Erfinder: Meyer, Marcus, 76359, Pfaffenrot (DE)

(57) **Zusammenfassung**

Vorgeschlagen wird ein Anker (14) für eine elektrische Maschine (10). Der Anker (14) weist mehrere Polzähne (20) auf. Außerdem ist an dem Anker (14) wenigstens ein Sensormagnet (26) befestigt, dessen Magnetfeld durch wenigstens ein Sensorelement (28), vorzugsweise Hallsensoren, zur Erfassung der Lage-, Drehzahl- und/oder Drehrichtung des Ankers (14) erfassbar ist. Der wenigstens eine Sensormagnet (26) ist an einem der Polzähne (20) befestigt. Dies ermöglicht eine kostengünstige und bauraumoptimierte Sensor-Magnet-Applikation.

## Beschreibung

### Stand der Technik

Die Erfindung geht aus von einem Anker für eine elektrische Maschine nach dem Oberbegriff des Anspruchs 1. Der Anker weist mehrere Polzähne auf und wenigstens ein Sensormagnet, dessen Magnetfeld durch wenigstens ein Sensorelement, vorzugsweise Hallsensoren, zur Erfassung der Lage-, Drehzahl- und/oder Drehrichtung des Ankers erfassbar ist.

Dies ist notwendig, um zum Beispiel den aktuellen Drehwinkel der Abtriebswelle zu kennen. Diesen Winkel kann man beispielsweise zur Wischfeld-Optimierung oder zur Regelung von positionsabhängigen Geschwindigkeiten (Trajektorien/Kennlinien) verwenden. Heute verwendete Sensorsysteme verwenden meist zwei Hallsensoren, die über einen zusätzlichen auf der Welle montierten Sensormagneten stimuliert werden. Je nach Notwendigkeit werden auf dem Magneten zwei oder mehr Polpaare aufmagnetisiert. Zur Drehzahlerfassung reicht es aus, das Magnetfeld mit einem Hall-Sensor zu detektieren. Ist es notwendig die Drehrichtung festzustellen, sind zwei versetzte Sensoren notwendig. Diese liefern dann zwei Signale, die idealerweise elektrisch um 90° verschoben sind.

Damit die Polübergänge scharf abgebildet werden, sind in der Regel sehr präzise Magnetisiereinrichtungen notwendig. Diese Fertigungsprozessschritte haben mit ca. 50% einen recht hohen Anteil an den Gesamtkosten eines Sensormagneten.

### Vorteile der Erfindung

Der erfindungsgemäße Anker für eine elektrische Maschine mit den kennzeichnenden Merkmalen des Anspruchs 1 hat den Vorteil, dass eine kostengünstige und bauraumoptimierte Sensor-Magnet-Applikation möglich ist. Außerdem kann sich durch den Wegfall vom Sensormagneten auf der Welle eine Verkürzung der Baulänge von ca. 10-15% ergeben. Es ergeben sich auch größere konstruktive Freiheiten, da grundsätzlich beide Rotorenden verwendet werden können.

Hierzu ist ein Anker für eine elektrische Maschine vorgesehen, der mehrere Polzähne aufweist und an dem wenigstens ein Sensormagnet befestigt ist, dessen Magnetfeld durch wenigstens ein Sensorelement, vorzugsweise Hallsensoren, zur Erfassung der Lage-, Drehzahl- und/oder Drehrichtung des Ankers erfassbar ist, wobei der wenigstens eine Sensormagnet an einem der Polzähne befestigt ist.

Vorzugsweise ist der wenigstens eine Sensormagnet am Zahnkopf des Polzahnes befestigt ist, wodurch eine einfache Befestigung möglich ist.

Dadurch, dass der wenigstens eine Sensormagnet an einer Stirnseite eines der Polzähne befestigt ist, kann das Magnetfeld axial erfasst werden.

Ist der wenigstens eine Sensormagnet an dem Polzahn über eine Rastbefestigung angebracht ist, ist eine simple automatisierbare Bestückung möglich. Eine Aufbringung des Sensormagneten im Zweikomponenten-Spritzgussverfahren ergibt einen sicher haftenden Verbund.

Wird der wenigstens eine Sensormagnet aufgedruckt, ist eine weitere einfache und sicher haftende Anbringung möglich. Es ergibt sich hierbei eine hochtemperaturfeste Verbindung, wenn gummierte Binde- bzw. Klebemittel verwendet werden.

Wenn das Magnetfeld des wenigstens einen Sensormagneten axial in Bezug auf die Welle des Ankers ausgerichtet ist, können im montierten Zustand Sensoren das Magnetfeld einfach erfassen.

Vorzugsweise sind zwei Sensormagnete an der Stirnseite zweier Polzähne befestigt. Hierdurch ist eine höhere Auflösung möglich.

Eine elektrische Maschine mit einem derartigen Anker baut kürzer. Sind an einer solchen elektrischen Maschine zwei Sensorelemente vorgesehen sind, die das Magnetfeld erfassen, kann auf die Drehrichtung geschlossen werden.

Weitere Vorteile und vorteilhafte Weiterbildungen ergeben sich aus den Unteransprüchen und der Beschreibung.

### Zeichnung

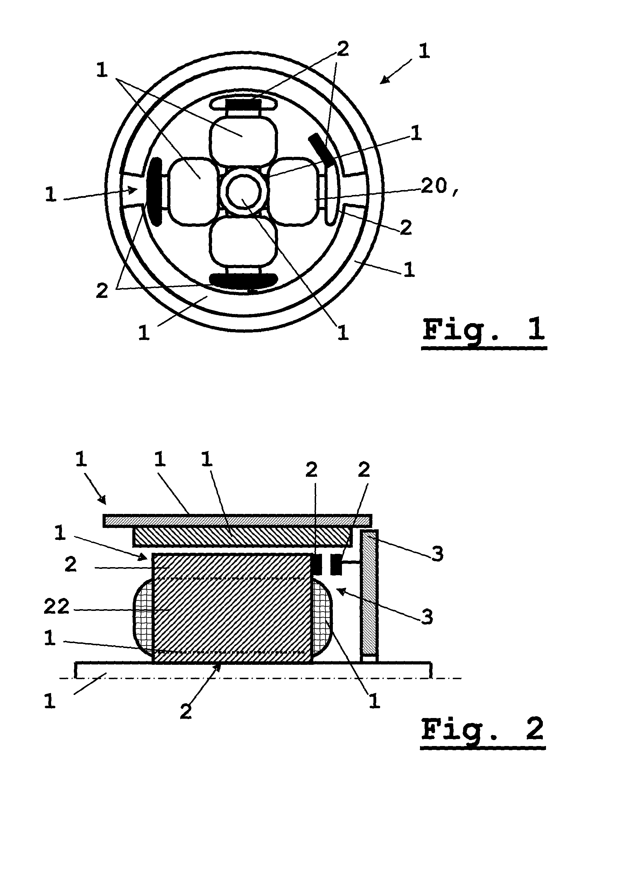

Ein Ausführungsbeispiel ist in der Zeichnung dargestellt und in der nachfolgenden Beschreibung näher erläutert. Es zeigen Figur 1 eine elektrische Maschine in einer Stimansicht ohne Lagerdeckel und Figur 2 eine Hälfte der elektrischen Maschine nach Figur 1 in einem Längsschnitt.

### Beschreibung des Ausführungsbeispiels

In den Figuren 1 und 2 ist eine rotierende elektrische Maschine 10 vereinfacht dargestellt. Die elektrische Maschine 10 kann ein Elektromotor sein, der in einem Kraftfahrzeug beispielsweise in einem Fensterheber, Wischerantrieb etc. verwendet wird. Es kann sich jedoch auch um einen Generator handeln. Vorzugsweise handelt es sich um einen bürstenbehafteten Gleichstrommotor oder Kommutatormotor.

Im Gehäuse 12 sind zwei Polmagnete 13 befestigt. Außerdem ist im Gehäuse 12 ein Anker 14 angeordnet, der auf einer Welle 16 befestigt ist. Hergestellt ist der Anker 14 beispielsweise als Lammellenpaket aus Blech oder aus sogenanntem SMC-Material (Soft Magnetic Composite).

Der Anker 14 weist mehrere Wicklungen 19 auf. Von einem kreisrunden Abschnitt 18 des Ankers 14 stehen mehrere Polzähne 20 radial nach außen ab, die Nuten zur Aufnahme der Wicklungen 19 bilden. Im vorliegenden Ausführungsbeispiel handelt es sich um vier Polzähne 20. Natürlich sind auch andere Zahlen möglich. Die Polzähne 20 umfassen jeweils einen Zahnhals 22, der vom Abschnitt 18 ausgeht, und einen Zahnkopf 24, der sich an den Zahnhals 22 anschließt und breiter als dieser ist. Die Polzähne 20 sind vorzugsweise gleichmäßig am Umfang des Ankers 14 verteilt.

An zwei der Polzähne 20, die vorzugsweise um 90° zueinander versetzt angeordnet sind, oder an allen ist jeweils ein Sensormagnet 26 befestigt. Es ist aber möglich, dass nur ein Sensormagnet 26 vorgesehen ist. Die Magnetfelder der Sensormagnete 26 werden durch zwei Sensorelemente 28, bei denen es sich vorzugsweise um Hallsensoren handelt, zur Erfassung der Lage-, Drehzahl- und/oder Drehrichtung des Ankers erfasst. Die Sensormagnete 26 sind am Zahnkopf 24 des jeweiligen Polzahnes 20 befestigt. In vorteilhafter Weise sind die Sensormagnete 26 an der Stirnseite 30 der Polzähne 20 befestigt. Das Magnetfeld der Sensormagnete 26 ist in Bezug auf die Welle des Ankers 14 axial ausgerichtet. Dadurch ist eine einfache Erfassung ihrer Magnetfelder durch die auf einer Leiterplatte 32 (Figur 2) montierte Sensorelemente 28 möglich. Die Leiterplatte 32 ist mit axialem Abstand zur Stirnseite 30 montiert. Statt einer Leiterplatte 32 kann es sich aber auch um ein in Kunststoff eingebettetes Stanzgitter oder dergleichen handeln.

Die Befestigung der Sensormagnete 26 kann über eine Rastbefestigung erfolgen oder mittels eines Zweikomponenten-Spritzgussverfahrens.

Es ist jedoch bevorzugt, die Sensormagneten 26 aufzudrucken. Die Magnetmasse der Sensormagnete 26 besteht hierbei aus einem Ferrit- oder Seltenerd-Pulver und wird mittels Binder zu einer homogenen, zähflüssigen Masse vermengt. Der Binder ist in der Regel eine Epoxid- oder gummihaltige Masse die gleichzeitig als Kleber fungieren kann. Die Magnetmasse kann nun entweder strukturiert oder in einer groben Geometrie mittels einem Druckverfahren (z.B. Siebdruck, Stempeln oder Kissendruck) aufgebracht und anschließend magnetisiert werden. Bild 1 zeigt deutlich die geänderte Lage der Sensormagnete 26.

Durch die orthogonale Wirk- bzw. Sensierungsebene der Sensormagnete 26 und Sensorelemente 28 ist auch keine Störung durch die Polmagnete 13 oder die Wicklung 19 zu erwarten.

Bedingt durch die Geometrie kann es zu ungleichen Signalverläufen (Puls-Pause-Verhältnis) kommen. Dies kann durch eine angepasste Magnetisierung korrigiert werden. Ist dies nicht zwingend notwendig, kann die unsymmetrische Signalfolge beibehalten werden. Eventuell sind die Schaltpunkte der Sensorelemente 28 bei einer geringen Flussdichte der Sensormagnete 26 herabzusetzen.

Natürlich genügt es - je nach Anwendung - auch nur einen Sensormagneten 26 und ein oder zwei Sensorelemente 28 vorzusehen. Ebenfalls können mehr als zwei Sensormagnete 26 und zwei Sensorelemente 28 vorgesehen werden.

## Patentansprüche

1. Anker (14) für eine elektrische Maschine (10), der mehrere Polzähne (20) aufweist und an dem wenigstens ein Sensormagnet (26) befestigt ist, dessen Magnetfeld durch wenigstens ein Sensorelement (28), vorzugsweise ein Hallsensor, zur Erfassung der Lage-, Drehzahl- und/oder Drehrichtung des Ankers (14) erfassbar ist, **dadurch gekennzeichnet, dass** der wenigstens eine Sensormagnet (26) an einem der Polzähne (20) befestigt ist.

2. Anker (14) nach Anspruch 1, **dadurch gekennzeichnet, dass** der wenigstens eine Sensormagnet (26) am Zahnkopf (24) des Polzahnes (20) befestigt ist.

3. Anker (14) nach Anspruch 1 oder 2, **dadurch gekennzeichnet, dass** der wenigstens eine Sensormagnet (26) an einer Stirnseite (30) eines der Polzähne (20) befestigt ist.

4. Anker (14) nach einem der Ansprüche 1 bis 3, **dadurch gekennzeichnet, dass** der wenigstens eine Sensormagnet (26) an dem Polzahn (20) über eine Rastbefestigung angebracht ist.

5. Anker (14) nach einem der Ansprüche 1 bis 3, **dadurch gekennzeichnet, dass** der wenigstens eine Sensormagnet (26) im Zweikomponenten-Spritzgussverfahren aufgebracht ist.

6. Anker (14) nach einem der Ansprüche 1 bis 3, **dadurch gekennzeichnet, dass** der wenigstens eine Sensormagnet (26) aufgedruckt ist.

7. Anker (14) nach Anspruch 5 oder 6, **dadurch gekennzeichnet, dass** gummierte Binde- und/oder Klebemittel für die Magnetmasse des Sensormagneten (26) verwendet werden.

8. Anker (14) nach einem der vorhergehenden Ansprüche, **dadurch gekennzeichnet, dass** das Magnetfeld des wenigstens einen Sensormagneten (26) axial in Bezug auf die Welle (16) des Ankers (14) ausgerichtet ist.

9. Anker (14) nach einem der vorhergehenden Ansprüche, **dadurch gekennzeichnet, dass** wenigstens zwei Sensormagnete (26) an der Stirnseite (30) zweier Polzähne (20) befestigt sind.

10. Elektrische Maschine (10) mit einem Anker (14) nach einem der vorhergehenden Ansprüche.

11. Elektrische Maschine (10) nach Anspruch 10, **dadurch gekennzeichnet, dass** wenigstens zwei Sensorelemente (26) vorgesehen sind, die das Magnetfeld erfassen.
